(19) Europäisches Patentamt
European Patent Office
Office européen des brevets

(11) EP 4 712 158 A1

(12) **EUROPEAN PATENT APPLICATION**

(43) Date of publication:
**18.03.2026 Bulletin 2026/12**

(21) Application number: **25201312.3**

(22) Date of filing: **10.09.2025**

(51) International Patent Classification (IPC):
***H01M 4/134*** *(2010.01)* ***H01M 4/38*** *(2006.01)*
***H01M 4/62*** *(2006.01)* ***H01M 4/66*** *(2006.01)*
***H01M 10/0562*** *(2010.01)*

(52) Cooperative Patent Classification (CPC):
**H01M 4/621; H01M 4/134; H01M 4/386; H01M 4/624; H01M 4/66; H01M 10/0562;**
H01M 2300/0065

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.09.2024 JP 2024158636**

(71) Applicant: **TOYOTA JIDOSHA KABUSHIKI KAISHA**
**Toyota-shi, Aichi-ken 471-8571 (JP)**

(72) Inventors:
- **YOSHIDA, Jun**
  **Toyota-shi, Aichi-ken, 471-8571 (JP)**
- **NAKAMOTO, Hirofumi**
  **Toyota-shi, Aichi-ken, 471-8571 (JP)**
- **NOMOTO, Kazushige**
  **Toyota-shi, Aichi-ken, 471-8571 (JP)**
- **YUBUCHI, So**
  **Toyota-shi, Aichi-ken, 471-8571 (JP)**
- **WONG, Chi Kuen**
  **Toyota-shi, Aichi-ken, 471-8571 (JP)**
- **FURUYA, Ryosuke**
  **Toyota-shi, Aichi-ken, 471-8571 (JP)**

(74) Representative: **Winter, Brandl - Partnerschaft mbB**
**Alois-Steinecker-Straße 22**
**85354 Freising (DE)**

(54) **SOLID-STATE BATTERY**

(57) A solid-state battery (100) has a first collector (110), a first electrode layer (111), an electrolyte layer (120), a second electrode layer (131) and a second collector (130), in that order, wherein the first collector (110) includes a resin layer (112) that contacts the first electrode layer (111), the first electrode layer (111) contains an electrode active material, and the electrode active material has an active material resin.

FIG. 1

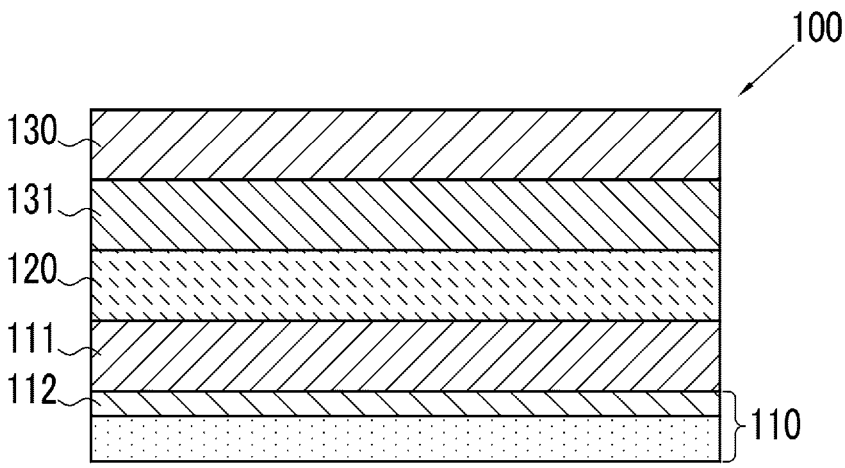


EP 4 712 158 A1

## Description

BACKGROUND

Technical Field

The present disclosure relates to a solid-state battery.

Related Art

Recently, demands on secondary batteries are increasing, and, in addition to secondary batteries that use an electrolyte liquid, the development of solid-state batteries using a solid electrolyte has advanced. An all-solid-state battery that is an example of a solid-state battery is a battery having a solid electrolyte layer instead of an electrolyte liquid. Because all-solid-state batteries do not use flammable organic solvents, simplification of the safety devices is devised, and such batteries have excellent manufacturing cost and mass producibility.

As a negative electrode layer that is used in all-solid-state batteries, there are known negative electrode layers in which the negative electrode active material is composite particles, which have a binder and plural particles containing the element Si or the element Sn. Such a negative electrode layer can suppress a deterioration in the cycling characteristics that is due to volume changes in the negative electrode active material during charging/discharging (Japanese Patent Application Laid-Open (JP-A) No. 2019-121557). Further, as a negative electrode active material powder that can improve battery characteristics, there are known negative electrode active material powders having a fluorinated layer at the surfaces of the secondary particles that are formed from single particles of Si, Sn or the like (JP-A No. 2021-057216).

SUMMARY

When using, as a negative electrode active material, a substance in which volume changes arise, it is difficult to completely suppress volume change amounts of these substances during charging/discharging, and, depending on the case, the internal resistance may increase greatly.

A topic that an embodiment of the present disclosure addresses is the provision of a solid-state battery in which an increase in internal resistance due to charging/discharging is suppressed.

The disclosure provides the following aspects:

A first aspect of the present disclosure provides a solid-state battery comprising a first collector, a first electrode layer, an electrolyte layer, a second electrode layer and a second collector in that order, wherein the first collector includes a resin layer that contacts the first electrode layer, the first electrode layer contains an electrode active material, and the electrode active material has an active material resin.

A second aspect of the present disclosure provides the solid-state battery of the first aspect, wherein the electrode active material contains secondary particles, and the secondary particles contain a plurality of primary particles and the active material resin.

A third aspect of the present disclosure provides the solid-state battery of the first or second aspect, wherein the resin layer contains a resin, and the active material resin and the resin in the resin layer have a structure in common.

A fourth aspect of the present disclosure provides the solid-state battery of any one of the first to third aspects, wherein the resin layer contains a resin, and the active material resin and the resin in the resin layer have a functional group in common.

A fifth aspect of the present disclosure provides the solid-state battery of any one of the first to fourth aspects, wherein the resin layer contains a resin, and the active material resin and the resin in the resin layer have a resin in common.

A sixth aspect of the present disclosure provides the solid-state battery of any one of the first to fifth aspects, wherein

> the resin layer contains a resin, and
> the active material resin and the resin in the resin layer include a structure expressed by at least one of formula (1) and formula (2).

$$(1):\ -\!\left(CH_2-CHR\right)_n\!-$$

$$(2):\ -\!\left(CH_2-CF_2\right)_n\!-$$

In formula (1), R represents an alkyl group, an allyl group, a hydroxy group, a carboxy group, a methoxy group or an ethoxy group, and n in formula (1) and formula (2) each independently represents an integer of 1 or more.

A seventh aspect of the present disclosure provides the solid-state battery of any one of the first to sixth aspect, wherein the active material resin and a resin in the resin layer include a structure expressed by the formula (1), or include a structure expressed by the following formula (2).

An eighth aspect of the present disclosure provides the solid-state battery of any one of the first to seventh aspects, wherein the active material resin can adhere to the resin layer.

A ninth aspect of the present disclosure provides the solid-state battery of any one of the first to eighth aspects, wherein the first collector further has a metal layer.

A tenth aspect of the present disclosure provides the solid-state battery of any one of the first to eighth aspects, wherein the first collector is a conductive resin collector.

An eleventh aspect of the present disclosure provides the solid-state battery of any one of the first to tenth aspects, wherein the resin layer has a region to which the electrode active material adheres.

A twelfth aspect of the present disclosure provides the solid-state battery of any one of the first to eleventh aspects, wherein the electrode active material contains element Si.

A thirteenth aspect of the present disclosure provides the solid-state battery of the ninth aspect, wherein the metal layer is a nickel foil, and the first collector includes a nickel foil and the resin layer in that order.

A fourteenth aspect of the present disclosure provides the solid-state battery of any one of the first to thirteenth aspects, wherein the first electrode layer contains a binder, and the binder is at least one type selected from the group consisting of styrene-butadiene rubber, polyvinylidene fluoride, and a vinyl resin.

A fifteenth aspect of the present disclosure provides the solid-state battery of any one of the first to fourteenth aspects, wherein the solid-state battery is an all-solid-state battery.

In accordance with an embodiment of the present disclosure, there is provided a solid-state battery in which an increase in internal resistance due to charging/discharging is suppressed.

## BRIEF DESCRIPTION OF THE DRAWINGS

FIG. 1 is a schematic sectional view of a solid-state battery of an embodiment of the present disclosure.

FIG. 2 is a schematic sectional view of a negative electrode of a solid-state battery of an embodiment of the present disclosure.

FIG. 3 is a graph illustrating results of measurement of normalized resistance increase rates in Examples and Comparative Examples.

## DETAILED DESCRIPTION

In the present disclosure, numerical value ranges expressed by using "-" mean ranges in which the numerical values listed before and after the "-" are included as the minimum value and maximum value, respectively.

In numerical value ranges that are expressed in a stepwise manner in the present disclosure, the upper limit value or the lower limit value listed in a given numerical value range may be substituted by the upper limit value or the lower limit value of another numerical value range that is expressed in a stepwise manner. In the numerical value ranges put forth in the present disclosure, the upper limit value or the lower limit value listed in a given numerical value range may be substituted by a value set forth in the Examples.

In the present disclosure, combinations of two or more preferable aspects are more preferable aspects.

In the present disclosure, in a case in which there are plural types of materials that correspond to a component, the amount of that component means the total amount of the plural types of materials, unless otherwise specified.

In the present disclosure, when embodiments are described with reference to the drawings, the structure of the embodiment is not limited to the structure illustrated in the drawings.

Further, the sizes of members in the respective drawings are schematic, and the relative relationships of the sizes of the members are not limited to these.

<Solid-State Battery>

As illustrated in FIG. 1, a solid-state battery (100) relating to an embodiment of the present disclosure (hereinafter also called solid-state battery (100)) has a first collector (110), a first electrode layer (111), an electrolyte layer (120), a second electrode layer (131) and a second collector (130), in that order. The first collector (110) contains a resin layer (112) that contacts the first electrode layer (111), and the first electrode layer (111) contains an electrode active material. The electrode active material has an active material resin.

The first collector and the first electrode layer, and the second collector and the second electrode layer, respectively structure electrodes of the solid-state battery. In a case in which the first collector and the first electrode layer structure a negative electrode, the second collector and the second electrode layer structure a positive electrode. On the other hand, in a case in which the first collector and the first electrode layer structure a positive electrode, the second collector and the second electrode layer structure a negative electrode. Accordingly, the solid-state battery has a negative electrode, an electrolyte layer and a positive electrode.

An embodiment in which the first collector and the first electrode layer structure the negative electrode and the second collector and the second electrode layer structure the positive electrode is described hereinafter. **In** the present embodiment, the first collector is a negative electrode collector, the first electrode layer is a negative electrode layer, the second collector is a positive electrode collector, and the second electrode layer is a positive electrode layer.

It is known that, in a solid-state battery, there are cases in which expansion and contraction during charging/-discharging arise at the negative electrode active material that is contained in the negative electrode layer. Due to expansion and contraction of the negative electrode active material, cracking of the negative electrode layer occurs, separation of the negative electrode collector and the negative electrode layer occurs, and the like, which lead to an increase in internal resistance. For example, a Si-based active material containing the element Si is a high-capacity active material, on the other hand, its expansion amount tends to be large. Provided that an increase in internal resistance due to expansion and contraction during charging/discharging can be suppressed, use of, in particular, a negative electrode active material whose expansion amount is large such as an Si active material in this way is preferable because there is the possibility of such a negative electrode active material contributing greatly to an improvement in the cycling characteristics of the battery.

The present inventors studied suppressing separation of a collector and an electrode layer, in order to suppress an increase in internal resistance during charging/discharging at a solid-state battery. They discovered that, by using, in the negative electrode layer, a negative electrode active material containing a resin (an active material resin) that is adhesive with respect to the negative electrode collector that has a resin layer, separation of the negative electrode collector and the negative electrode layer is suppressed even if there is expansion and contraction of the negative electrode active material.

Although the mechanism by which separation of the collector and the electrode layer is suppressed is unclear, it is assumed that, due to a structure in which the resin layer at the collector has a resin, and the electrode active material at the electrode layer has an active material resin, and the collector and the electrode layer are joined with resin interposed therebetween, an anchoring effect is suitably exhibited, and separation of the collector and the electrode layer is suppressed effectively.

(Negative Electrode)

The negative electrode relating to the embodiment of the present disclosure includes a negative electrode collector and a negative electrode layer. The negative electrode collector contains a resin layer, and may be a form that contains a negative electrode base material layer and a resin layer. Due to the negative electrode collector containing a resin layer, and the negative electrode layer containing an electrode active material, and the electrode active material having an active material resin, separation of the negative electrode collector and the negative electrode layer is suppressed, and an increase in internal resistance during charging/discharging is suppressed.

(Negative Electrode Collector)

The negative electrode collector contains a resin layer, and can be made to be a form that includes a negative electrode base material layer and a resin layer. The negative electrode contains the resin layer (or the negative electrode base material layer and the resin layer) and the negative electrode layer in that order.

As illustrated in FIG. 2, a negative electrode (10) relating to the embodiment of the present disclosure includes a negative electrode base material layer (11), a resin layer (12) and a negative electrode layer (13) in that order.

(Resin Layer)

One surface of the resin layer (12) contacts the negative electrode layer (13). **In** a case in which the negative electrode collector (14) has a negative electrode base material layer (11), the other surface of the resin layer (12) contacts the negative electrode base material layer (11). The resin layer (12) contains a resin.
It is preferable that the resin in the resin layer be able to adhere to the negative electrode base material layer and the active material resin of the electrode active material of the negative electrode layer. The resin in the resin layer and the active material resin being able to adhere means that the resin in the resin layer and the active material resin can chemically or physically bond together and join together. **In** an all-solid-state battery, it is preferable that the resin in the resin layer and the active material resin have regions that chemically or physically bond together and join together strongly, in at least any state among before charging, during charging, after charging, before use, during use, and after use for example.
Examples of a resin layer that can adhere to the negative electrode base material layer and the active material resin include resins that melt or soften by being heated. Specific examples of resins that melt or soften due to heating are polyolefins such as polyethylene and polypropylene, polyesters such as polyamide and polyethylene terephthalate, thermoplastic resins such as polyurethane and ethylene - vinyl acetate copolymers, rubber resins such as butadiene rubber (BR) and styrene-butadiene rubber (SBR), fluoride resins such as polyvinylidene fluoride (PVdF), and vinyl resins such as polyvinyl chloride, polyvinylidene chloride, vinyl acetate, polyvinyl alcohol, and styrene resins.
From the standpoint of adhesion with the active material resin, the resin in the resin layer preferably contains a common structure that is also present in the active material resin. The common structure is described later in the description of the active material resin. Further, from the standpoint of adhesion with the active material resin, the resin in the resin layer preferably contains a common functional group that is also present in the active material resin. The common functional group is described later in the description of the active material resin.
From the standpoint of adhesion with the active material resin, the resin in the resin layer preferably contains a common resin that is also present in the active material resin. The common resin is described later in the description of the active material resin.
In addition to the resin in the resin layer, the resin layer can further contain a conductive material. By containing a conductive material, the resin layer can be made to be a conductive resin layer. If the negative electrode collector has a conductive resin layer, it can be made to be a conductive resin collector, and does not necessarily have to have the negative electrode base material layer that is described later.
Examples of conductive materials are carbon materials, conductive polymers and metal particles. One type of conductive material may be used alone, or two or more types may be used together.
Examples of carbon materials are particle-shaped carbon materials and fiber-shaped carbon materials. Examples of particle-shaped carbon materials are acetylene black (AB) and ketjen black (KB). Examples of fiber-shaped carbon materials are carbon nanotubes (CNT), carbon nanofibers (CNF) and vapor grown carbon fibers (VGCF).
Examples of conductive polymers are polythiophene, polyacetylene, polyparaphenylene and polyisothianaphthene.
Examples of metal particles are particles made of nickel, copper, iron, and stainless steel. Thereamong, from the standpoints of improving the anchoring effect, and further suppressing separation of the active material layer from the resin collector and a deterioration in the cycling characteristics, the conductive material preferably contains a carbon material, and more preferably contains at least one of acetylene black (AB) and vapor grown carbon fibers (VGCF), and even more preferably contains vapor grown carbon fibers (VGCF).
The content of the conductive material is, with respect to the total solids of the negative electrode collector, preferably 10 mass% - 50 mass%, and more preferably 15 mass% - 43 mass%.
From the standpoint of the resin layer adhering to the negative electrode base material layer and the active material resin of the electrode active material of the negative electrode layer even if there is expansion and contraction of the electrode active material, the thickness of the resin layer is preferably 1 $\mu$m or more, and more preferably 3 $\mu$m or more. The thickness of the resin layer is preferably 50 $\mu$m or less, and more preferably 30 $\mu$m or less.
The resin layer preferably has a region to which the electrode active material of the negative electrode layer adheres. Due to the resin layer having a region to which the electrode active material of the negative electrode layer adheres, even if there is expansion and contraction of the electrode active material during charging/discharging, separation of the negative electrode collector and the negative electrode layer is suppressed, and an increase in the internal resistance of a solid-state battery due to charging/discharging is suppressed.

(Negative Electrode Base Material Layer)

Known materials that are used for collectors of negative electrodes can be used as the negative electrode base material layer. The negative electrode base material layer may be any of made of metal, made of resin, or the like.
Aluminum foil, nickel foil, titanium foil, or copper foil is used as the negative electrode base material layer that is made of metal.

Known materials that are used for resin collectors can be used as the negative electrode base material layer that is made of resin. A conductive resin collector that is a composite material containing a resin, such as polyethylene or phenol resin, and a conductive filler, such as graphite, can be used.

It is preferable to be able to form a resin layer at the negative electrode base material layer. The material of the negative electrode base material layer may be selected in accordance with the type of resin formed at the negative electrode base material layer. From the standpoints of the ability to fit tightly to the resin layer and electron conductivity, the negative electrode base material layer is preferably a metal foil. Concretely, preferable examples of the metal foil are nickel, aluminum, copper and stainless steel (SUS), and it is more preferable that a nickel foil contact the resin layer. The negative electrode collector may include a nickel foil and a resin layer in that order.

Note that the negative electrode base material layer may be structured from two layers of different types, or may be structured by only a single layer.

From the standpoints of the ability to fit tightly to the negative electrode layer and the ability to follow the expansion and contraction of the electrode active material, the negative electrode base material layer is preferably a conductive resin collector. A known structure can be used as the conductive resin collector.

(Preparation of Negative Electrode Collector)

It suffices to be able to prepare the negative electrode collector to include a negative electrode base material layer and a resin layer, and the negative electrode collector can be prepared by a known production method. For example, the negative electrode collector can be prepared by coating a composition, which contains the resin in the resin layer, on the negative electrode base material layer.

(Negative Electrode Layer)

The negative electrode layer contains a negative electrode composite material. The negative electrode composite material contains a negative electrode active material. The negative electrode active material may be in particle form. If the negative electrode active material is particle-shaped, the particles have the active material resin. It is preferable that the active material resin can adhere to the resin layer.

(Negative Electrode Active Material)

The negative electrode active material has the active material resin. It is preferable that the active material resin can adhere to the resin layer. The negative electrode active material may be a particle-shaped active material. The particle-shaped active material may contain at least one of primary particles and secondary particles. The negative electrode active material or the particle-shaped active material preferably contains the element silicon (Si).

If the negative electrode active material contains the active material resin and particles, separation of the collector and the electrode layer is suppressed effectively due to the gaps formed between the particles mitigating expansion and contraction.

Whether the particle-shaped active material is primary particles or secondary particles can be differentiated by observation by an SEM (scanning electron microscope).

(Primary Particles)

The primary particles are preferably an Si active material containing the element Si. Examples of Si active materials are elemental Si, Si alloys, Si oxides, Si carbide and Si oxycarbide (silicon oxycarbide). Si alloys are alloys whose main component is the element Si. Examples of metals other than Si in an Si alloy are at least one type selected from, for example, W, Mo, Cr, V, Nb, Fe, Ti, Zr, Hf and Os. An example of Si oxides is SiO. Further, Si active materials may have a diamond crystal phase as the main phase thereof, or may have a type-I clathrate crystal phase as the main phase thereof, or may have a type-II clathrate crystal phase as the main phase thereof.

The primary particles may be solid particles or may be porous particles, but the latter is preferable. Because porous particles have voids at the interior thereof, volume changes of the porous particles can be absorbed, and, as a result, volume changes of the negative electrode layer due to charging/discharging can be reduced.

The void ratio of the porous particles is, for example, 4% or more, and may be 10% or more. On the other hand, the void ratio of the porous particles is, for example, 40% or less, and may be 20% or less. The void ratio is determined by a process such as that described hereinafter. First, cross-section processing is carried out by ion milling on the electrode layer that contains an active material. Then, this cross-section is observed by an SEM (scanning electron microscope), and a photograph in which porous particles are captured is obtained. The silicon portions and the void portions are clearly distinguished from the obtained photograph by using image analyzing software, and are binarized. Then, the areas of the

silicon portions and the void portions in the obtained photograph are determined, and the void ratio (%) is calculated from the following formula.

$$\text{void ratio (\%)} = \text{(void portion area)} / \text{((silicon portion area)} + \text{(void portion area))} \times 100$$

It is preferable that the porous particles have a large amount of minute voids whose pore diameter is 100 nm or less. Voids whose pore diameter is 100 nm or less can suppress collapsing of the voids due to pressing, as compared with voids whose pore diameter is greater than 100 nm. Void content X (integrated vacancy volume) of the voids whose pore diameter is 100 nm or less is, for example, 0.05 ml/g or more, and may be 0.10 ml/g or more, or may be 0.12 ml/g or more. On the other hand, the void content X is, for example, 0.40 ml/g or less. The void content in the present disclosure can be determined by BET measurement for example.

The porous particles preferably have a large amount of minute voids whose pore diameter is 50 nm or less. Voids whose pore diameter is 50 nm or less can further suppress collapsing of the voids due to pressing, as compared with voids whose pore diameter is greater than 50 nm and whose pore diameter is 100 nm or less. Void content Y of the voids whose pore diameter is 50 nm or less is, for example, 0.05 cc/g or more, and may be 0.075 ml/g or more, or may be 0.10 ml/g or more. On the other hand, the void content Y is, for example, 0.25 ml/g or less.

The porous particles preferably have a large amount of minute voids whose pore diameter is 10 nm or less. As compared with voids whose pore diameter is greater than 10 nm, voids whose pore diameter is 10 nm or less can contain precipitated Li at a high filling ratio, and therefore, can suppress volume changes due to charging/discharging. Void content Z of the voids whose pore diameter is 10 nm or less is, for example, 0.015 ml/g or more, and may be 0.02 ml/g or more, or may be 0.03 ml/g or more. On the other hand, the void content Z is, for example, 0.09 ml/g or less.

An example of the method of forming the porous particles is a method in which an LiSi alloy is prepared by reacting metallic Li with primary particles (the Si active material) that are solid particles, and thereafter, the Li is removed from the LiSi alloy. The LiSi alloy is obtained by, for example, mixing together primary particles (the Si active material) and metallic Li. The mol ratio (Li/Si) of the Li with respect to the Si is, for example, 1.0 or more, and may be 2.0 or more, or may be 3.0 or more, or may be 4.0 or more. On the other hand, Li/Si is 8.0 or less for example. An example of the method of removing Li from the LiSi alloy is a method of reacting the LiSi alloy with an Li extracting material. Examples of Li extracting materials are alcohols such as methanol, ethanol, 1-propanol, 1-butanol, 1-pentanol and 1-hexanol, and acids such as acetic acid, formic acid, propionic acid, and oxalic acid.

Another example of a method of forming the porous particles is a method in which an MgSi alloy is prepared by reacting metallic Mg with primary particles (the Si active material) that are solid particles, and thereafter, the Mg is removed from the MgSi alloy. The MgSi alloy is obtained by, for example, heating a mixture of primary particles (the Si active material) and metallic Mg. The proportion (Mg/Si) of the Mg with respect to the Si is, for example, 1.0 or more, and may be 1.5 or more, or may be 2.0 or more. On the other hand, Mg/Si is 6.0 or less for example. An example of the method of removing Mg from the MgSi alloy is a method of, by heating the MgSi alloy in an inert gas atmosphere containing oxygen, changing the Mg in the MgSi alloy into MgO, and thereafter, removing the MgO by an acid solution. Examples of the acid solution are aqueous solutions containing hydrochloric acid (HCl) and hydrogen fluoride (HF).

Particle diameter D50 of the primary particles is not particularly limited, and, for example, is 0.3 μm or more, and may be 0.5 μm or more. On the other hand, the particle diameter D50 of the primary particles is, for example, is 3.0 μm or less, and may be 2.5 μm or less. In the present disclosure, the particle diameter D50 is the cumulative 50% particle diameter in a volume-based particle diameter distribution obtained by a laser diffraction particle size distribution measuring device.

Further, from the minute particle side, the cumulative 10% particle diameter in the volume-based particle diameter distribution obtained by a laser diffraction particle size distribution measuring device is particle diameter D10, and the cumulative 90% particle diameter is particle diameter D90. (D90-D10)/D50 means the spread of the distribution, and, the smaller the value of (D90-D10)/D50, the narrower the distribution. (D90-D10)/D50 of the primary particles is not particularly limited, and, for example, is 0.1 or more and 3.0 or less, or may be 0.3 or more and 2.0 or less.

The BET specific surface area of the primary particles is not particularly limited, and, for example, is 1 $m^2/g$ or more, and may be 10 $m^2/g$ or more, or may be 20 $m^2/g$ or more, or may be 30 $m^2/g$ or more. On the other hand, the BET specific surface area of the primary particles, for example, is 200 $m^2/g$ or less and may be 150 $m^2/g$ or less.

The primary particles have the active material resin. It is preferable that the active material resin can adhere to the resin layer. The active material resin is described later. Due to the primary particles having an active material resin that can adhere to the resin layer, the resin layer and the active material resin adhere, and, even if there is expansion and contraction of the particles during charging/discharging, separation of the negative electrode collector and the negative electrode layer is suppressed, and an increase in the internal resistance of a solid-state battery due to charging/discharging is suppressed.

The form by which the primary particles have the active material resin is not particularly limited, and may be any of

a form in which the primary particles have the active material resin on portions of the surfaces, or a form in which the primary particles are coated with the active material resin, or the like.
The method of forming the primary particles that have the active material resin is not particularly limited, and a spray drying method is an example. A spray drying method is a method in which resin is coated due to a slurry, in which particles and the resin are dispersed in a solvent, being sprayed and dried.

(Secondary Particles)

The secondary particles are particles with which plural primary particles have aggregated. Aggregates in which the primary particles have aggregated, and granulated substances in which the primary particles are granulated, are included as the secondary particles. In a case in which the particles of the present disclosure contain the secondary particles, the primary particles of the secondary particles are fixed by the active material resin.
The active material resin is described later.
Particle diameter D50 of the secondary particles is, for example, 2.5 μm or more and less than 20 μm. The particle diameter D50 of the secondary particles may be 3.0 μm or more, or may be 5.0 μm or more. On the other hand, the particle diameter D50 of the secondary particles may be 19 μm or less, or may be 17 μm or less, or may be 15 μm or less. Further, (D90-D10)/D50 of the secondary particles is not particularly limited, and, for example, is 0.1 or more and 5.0 or less, and may be 0.3 or more and 1.0 or less.
The proportion of the particle diameter D50 of the primary particles with respect to the particle diameter D50 of the secondary particles is not particularly limited, and, for example, is 3% or more and 60% or less, and may be 5% or more and 40% or less, or may be 7% or more and 25% or less.
The method of forming the secondary particles is not particularly limited, and an example thereof is a method of granulating the particles by spray drying. A spray drying method is a method in which a slurry that contains plural primary particles, the active material resin, and a dispersion medium is sprayed in hot air, and is thereby dried. In a case of forming secondary particles that contain porous particles as the primary particles, first, the primary particles that are porous particles may be readied, and thereafter, the secondary particles may be formed by using the primary particles. Or, first, the primary particles that are solid particles may be readied, and thereafter, the secondary particles may be formed by using these primary particles, and thereafter, the primary particles that structure the secondary particles may be made to be porous.

(Active material resin)

The active material resin is preferably a resin that can adhere to the resin layer. One type of active material resin may be used, or two or more types may be used. Being able to adhere to the resin layer means that the active material resin can chemically or physically bond with the resin in the resin layer, and the active material resin and the resin layer can be bonded.
In an all-solid-state battery, it is preferable that the active material resin and the resin layer have regions that chemically or physically bond and strongly adhere to each other in at least one state among, for example, before charging, during charging, after charging, before use, during use, and after use.
The active material resin and the resin in the resin layer preferably contain structures expressed by at least one of following formula (1) and following formula (2). The active material resin and the resin in the resin layer having structures expressed by at least one of following formula (1) and following formula (2) is preferable because the both adhere together appropriately. A case in which the active material resin and the resin in the resin layer have, in the main chain, structures expressed by at least one of following formula (1) and following formula (2) is more preferable.

$$(1): \; -\!\left(CH_2-CHR\right)_n\!-$$

$$(2): \; -\!\left(CH_2-CF_2\right)_n\!-$$

**In** formula (1), R represents an alkyl group, an allyl group, a hydroxy group, a carboxy group, a methoxy group or an ethoxy group, and n in formula (1) and formula (2) each independently represents an integer of 1 or more. These groups may be substituted or may be unsubstituted.
Examples of the substituted or unsubstituted alkyl group represented by R are alkyl groups of a carbon number of 1 - 10, e.g., methyl group, ethyl group. propyl group and isopropyl group. The alkyl group may be straight-chain, may have

branches, or may have a ring structure. Examples of substituents are halogen atoms, alkyl group, allyl group, phenyl group, alkenyl group, alkoxy group, ester group, carbonyl group, sulfonyl group, amino group, amide group, and groups that combine these.

Each of the allyl group, carboxy group, methoxy group and ethoxy group represented by R may be substituted or unsubstituted. Examples of substituents are halogen atoms, alkyl group, allyl group, phenyl group, alkenyl group, alkoxy group, ester group, carbonyl group, sulfonyl group, amino group, amide group, and groups that combine these.

It suffices for each of the active material resin and the resin in the resin layer to have structures expressed by at least one of formula (1) and formula (2), and there may be a combination thereof. For example, there may be any of a case in which the active material resin has the structure expressed by formula (1) and the resin in the resin layer has the structure expressed by formula (1), a case in which the active material resin has the structure expressed by formula (1) and the resin in the resin layer has the structure expressed by formula (2), a case in which the active material resin has the structure expressed by formula (2) and the resin in the resin layer has the structure expressed by formula (1), and a case in which the active material resin has the structure expressed by formula (2) and the resin in the resin layer has the structure expressed by formula (2).

It is preferable for the active material resin and the resin in the resin layer to have a structure in common. The active material resin and the resin in the resin layer including a common structure are preferable because both can appropriately adhere to each other.

An example of a common structure is a vinyl polymer structure in which ethylenically unsaturated double bonds are polymerized.

It is preferable that the active material resin and the resin in the resin layer contain the structure expressed by above formula (1), or that the active material resin and the resin in the resin layer to contain the structure expressed by above formula (2). The active material resin and the resin in the resin layer having in common either of the structures expressed by formula (1) or formula (2) is preferable because the both can adhered together appropriately.

It is preferable for the active material resin and the resin in the resin layer to have a functional group in common. The active material resin and the resin in the resin layer having a common functional group are preferable because both can appropriately adhere to each other.

An example of a common functional group is a phenyl group.

Specific examples of the active material resin are rubber resins such as butadiene rubber (BR) and styrene-butadiene rubber (SBR), fluoride resins such as polyvinylidene fluoride (PVdF), and vinyl resins such as polyvinyl chloride, polyvinylidene chloride, vinyl acetate, polyvinyl alcohol, and styrene resins.

It is preferable for the active material resin and the resin in the resin layer to have a resin in common. The active material resin and the resin in the resin layer containing a common resin are preferable because the both can adhered together appropriately. Examples of the common resin are the resins exemplified as the active material resin described above, specifically rubber resins such as butadiene rubber (BR) and styrene-butadiene rubber (SBR), fluorinated resins such as polyvinylidene fluoride (PVdF), and vinyl resins such as polyvinyl chloride, polyvinylidene chloride, vinyl acetate, polyvinyl alcohol, and styrene resins.

In the secondary particles, the proportion of the active material resin with respect to the total of the plural primary particles and the active material resin is, for example, 1 mass% or more and 30 mass% or less, and may be 5 mass% or more and 25 mass% or less. On the other hand, the secondary particles may be particles in which a sintered body, in which plural first particles are aggregated, have the active material resin.

(Solid Electrolyte)

The negative electrode composite material may contain a solid electrolyte. Examples of solid electrolytes are inorganic solid electrolytes such as sulfide solid electrolytes, oxide solid electrolytes, nitride solid electrolytes and halide solid electrolytes.

A sulfide solid electrolyte is a solid electrolyte containing the element sulfur (element S) as the main component that is an anion element. An example of the sulfide solid electrolyte is a solid electrolyte containing the element Li, element X (X is at least one of P, As, Sb, Si, Ge, Sn, B, Al, Ga and In), and the element S. The sulfide solid electrolyte may contain one type of element or may contain two or more types of elements as element X. The sulfide solid electrolyte preferably contains the element P as element X. The sulfide solid electrolyte may further contain at least one of the element O and a halogen element. Examples of the halogen element are the element F, element Cl, element Br and element I.

The sulfide solid electrolyte may be glass (amorphous) or may be glass ceramic or may be crystalline. The sulfide solid electrolyte may have a crystal phase. Examples of the crystal phase are thio-LISICON crystal phase, argyrodite crystal phase and LGPS crystal phase.

The composition of the sulfide solid electrolyte is not particularly limited, and examples thereof are $xLi_2S\cdot(1-x)P_2S_5$ ($0.5\leq x<1$) and $yLiI\cdot zLiBr\cdot(100-y-z)(xLi_2S\cdot(1-x)P_2S_5)$ ($0.5\leq x<1$, $0\leq y\leq 30$, $0\leq z\leq 30$).

In these compositions, it is preferable that x satisfy $0.7 \leq x \leq 0.8$. Further, $Li_{7-x}PS_{6-x}X_x$ is another example of the composition of the sulfide solid electrolyte. X is at least one of F, Cl, Br and I, and x satisfies $0 \leq x \leq 2$. Further, $Li_{4-x}Me_{1-x}P_xS_4$ ($0<x<1$) is another example of the composition of the sulfide solid electrolyte. Me is at least one of Al, Zn, In, Ge, Si, Sn, Sb, Ga and Bi.

An oxide solid electrolyte is a solid electrolyte containing the element oxygen as the main component that is an anion element. A nitride solid electrolyte is a solid electrolyte containing the element nitrogen as the main component that is an anion element. A halide solid electrolyte is a solid electrolyte containing a halogen element as the main component that is an anion element. Arbitrary, known solid electrolytes can be employed as these solid electrolytes. The solids ratio of the solid electrolyte in the negative electrode composite material is, for example 10 mass% or more and 50 mass% or less, and may be 20 mass% or more and 40 mass% or less.

Particle diameter D50 of the solid electrolyte is not particularly limited and is, for example, 0.05 μm or more and less than 2.0 μm. The particle diameter D50 of the solid electrolyte may be 0.1 μm or more, or may be 0.2 μm or more, or may be 0.3 μm or more. On the other hand, the particle diameter D50 of the solid electrolyte may be 1.8 μm or less, or may be 1.5 μm or less, or may be 1.2 μm or less, or may be 1.0 μm or less.

The proportion (SE/Si2) of the particle diameter D50 of the solid electrolyte with respect to the particle diameter D50 of the secondary particles is not particularly limited, and for example, is 0.5% or more, and may be 1.0% or more, or may be 1.2% or more, or may be 1.5% or more. On the other hand, the proportion (SE/Si2) is, for example, 15% or less, and may be 12% or less, or may be 10% or less, or may be 5% or less.

(Other Materials)

The negative electrode composite material may further contain a conductive material. Examples of the conductive materials are carbon conductive materials and metal conductive materials. Examples of carbon conductive materials are particle-shaped carbon conductive materials such as acetylene black (AB) and ketjen black (KB), and fiber-shaped carbon conductive materials such as carbon fibers, carbon nanotubes (CNT) and carbon nanofibers (CNF). It is preferable that the fiber-shaped carbon conductive material is carbon nanotubes (CNT) such as single-walled carbon nanotubes (SWCNT) and multi-walled carbon nanotubes (MWCNT). Further, if the conductive material is particle-shaped, particle diameter D50 of the conductive material is not particularly limited and, for example, is 10 nm or more and 10 μm or less, and may be 20 nm or more and 1 μm or less, or may be 30 nm or more and 500 nm or less. The solids ratio of the conductive material in the negative electrode composite material is, for example, 0.05 mass% or more and 3 mass% or less.

Other than the above-described active material resin that structures the secondary particles, the negative electrode composite material may further contain a binder that does not structure the secondary particles.

Types of the binder are similar to the contents put forth with respect to the above-described active material resin. Specifically, examples are rubber resins such as butadiene rubber (BR) and styrene-butadiene rubber (SBR), fluoride resins such as polyvinylidene fluoride (PVdF), and vinyl resins such as polyvinyl chloride, polyvinylidene chloride, vinyl acetate, polyvinyl alcohol, and styrene resins.

Namely, the negative electrode layer contains a binder, and the binder is preferably styrene-butadiene rubber, polyvinylidene fluoride, or a vinyl resin.

The solids ratio of the binder in the negative electrode composite material is, for example, 0.1 mass% or more and 5 mass% or less.

The negative electrode composite material may further contain a dispersion medium, but does not have to contain a dispersion medium. Examples of the dispersion medium are butyl acetate, butyl butyrate, mesitylene, tetralin, heptane, and N-methyl-2-pyrrolidone (NMP). If the negative electrode composite material contains a dispersion medium, the solids ratio of the negative electrode composite material is, for example, 20 mass% or more and 80 mass% or less. Further, the negative electrode composite material is usually used in a battery, and is preferably used in a solid-state battery.

The method of manufacturing the negative electrode composite material is not particularly limited. The negative electrode composite material may be obtained by preparing particles that are a negative electrode active material.

The particles of the negative electrode active material may include the primary particles and the secondary particles. For example, at the time of preparing the secondary particles by a spray drying method, by adjusting the preparation conditions (e.g., by making the added amount of the active material resin relatively small), while the secondary particles are formed from the primary particles and the active material resin, some of the primary particles are made to remain without being made into the secondary particles, and the negative electrode active material can be made to contain primary particles and secondary particles. The primary particles that were not made into secondary particles are primary particles, and, as a result, a negative electrode composite material that includes the primary particles and the secondary particles is obtained.

(Positive Electrode)

The positive electrode relating to the embodiment of the present disclosure contains a positive electrode collector and a positive electrode layer. The positive electrode collector contains a positive electrode base material layer.

The positive electrode layer usually contains a positive electrode composite material. The positive electrode composite material contains at least a positive electrode active material, and may further contain at least one of a solid electrolyte, a conductive material and a binder.

Examples of the positive electrode active material are oxide active materials. Examples of oxide active materials are layered rock salt type active materials such as $LiCoO_2$, $LiMnO_2$, $LiNiO_2$, $LiVO_2$, $LiNi_{1/3}Co_{1/3}Mn_{1/3}O_2$ and $LiNi_{0.8}Co_{0.15}Al_{0.05}O_2$, spinel type active materials such as $LiMn_2O_4$, $Li_4Ti_5O_{12}$ and $Li(Ni_{0.5}Mn_{1.5})O_4$, and olivine type active materials such as $LiFePO_4$, $LiMnPO_4$, $LiNiPO_4$ and $LiCoPO_4$.

A coated layer containing an Li-ion conductive oxide may be formed on the surface of the oxide active material. This is because the reaction between the oxide active material and the solid electrolyte (sulfide solid electrolyte in particular) can be suppressed. An example of the Li-ion conductive oxide is $LiNbO_3$. The thickness of the coated layer is, for example, 1 nm or more and 30 nm or less.

The solid electrolyte, the conductive material and the binder used in the positive electrode composite material are the same as the binder described with respect to the above-described negative electrode layer. Further, the thickness of the positive electrode layer is, for example, 0.1 μm or more and 500 μm or less, or may be 0.1 μm or more and 100 μm or less, or may be 0.1 μm or more and 50 μm or less. Further, an example of the method of forming the positive electrode layer is, for example, a method in which a positive electrode composite material containing a dispersion medium is coated on a positive electrode collector and dried.

(Electrolyte Layer)

The electrolyte layer is formed between the positive electrode layer and the negative electrode layer, and contains a solid electrolyte. The electrolyte layer may further contain a binder. The solid electrolyte and the binder are similar to those described above. The thickness of the electrolyte layer is, for example, 0.1 μm or more and 500 μm or less, or may be 0.1 μm or more and 100 μm or less, or may be 0.1 μm or more and 50 μm or less.

(Other Structures)

The solid-state battery relating to the embodiment of the present disclosure preferably has a positive electrode collector that carries out power collection of the positive electrode layer. Examples of the material of the positive electrode collector are SUS, aluminum, nickel, iron, titanium and carbon. On the other hand, examples of the material of the negative electrode collector (specifically the negative electrode base material layer) are SUS, copper, nickel and carbon.

The solid-state battery in the present disclosure may further have a restraining jig that applies restraining pressure along the thickness direction to the positive electrode layer, the electrolyte layer and the negative electrode layer. The restraining pressure is, for example, 0.1 MPa or more, and may be 1 MPa or more, or may be 5 MPa or more. On the other hand, the restraining pressure is, for example, 100 MPa or less, and may be 50 MPa or less, or may be 20 MPa or less.

(Solid-State Battery)

The solid-state battery has a negative electrode, an electrolyte layer and a positive electrode in that order. The negative electrode has a negative electrode collector and a negative electrode layer. The positive electrode has a positive electrode layer and a positive electrode collector. The type of the solid-state battery is not particularly limited, and is typically a lithium ion battery. The solid-state battery in the present disclosure may be a primary battery or may be a secondary battery, but thereamong, is preferably a secondary battery. This is because a secondary battery is useful as a battery that can be repeatedly charged/discharged, e.g., a battery installed in a vehicle. The solid-state battery may be a semi-solid-state battery, or may be an all-solid-state battery. The solid-state battery is preferably an all-solid-state battery.

Examples of applications of the solid-state battery are the power sources of vehicles such as hybrid vehicles (HEVs), plug-in hybrid vehicles (PHEVs), electric vehicles (BEVs), gasoline-powered vehicles and diesel-powered vehicles. In particular, the solid-state battery is preferably used as the power source for the driving of a hybrid vehicle (HEV), a plug-in hybrid vehicle (PHEV) or an electric vehicle (BEV). Further, the solid-state battery may be used as the power source for a moving body other than a vehicle (e.g., a train, ship or airplane), or may be used as the power source for an electric product such as an information processing device. The method of manufacturing the solid-state battery is not particularly limited, and a known method can be employed therefor.

EXAMPLES

The present disclosure is described in further detail hereinafter by way of Examples.

[Example 1]

1. Preparation of Negative Electrode Layer

(Preparation of Primary Particles)

0.65 g of Si particles (manufactured by Kojundo Chemical Laboratory Co., Ltd.) and 0.60 g of Li metal (manufactured by Honjo Metal Co., Ltd.) were mixed together in an agate mortar in an Ar atmosphere, and an LiSi precursor was obtained. 1.0 g of the LiSi precursor and 125 ml of a dispersion medium (1,3,5-trimethylbenzene, manufactured by Nacalai Tesque Inc.) were mixed together within a glass reaction vessel that was in an Ar atmosphere by using an ultrasonic homogenizer (UH-50 manufactured by SMT Co., Ltd). The LiSi precursor dispersion liquid obtained after the mixing was cooled to 0°C. 125 ml of ethanol (manufactured by Nacalai Tesque Inc.) serving as an Li extracting solvent was added by drops, and a reaction was carried out for 120 minutes. After the reaction, 50 ml of acetic acid (manufactured by Nacalai Tesque Inc.) was further added by drops, and a reaction was carried out for 60 minutes. After the reaction, the liquid and the solid reaction product were separated by suction filtration. The obtained solid reaction product was vacuum dried at 120°C for 2 hours, and primary particles that were porous (nanoporous Si) were recovered.

The recovered primary particles were classified, and the particle diameter D50 of the primary particles was adjusted to 1.5 μm.

(Preparation of Secondary Particles)

The obtained primary particles (nanoporous Si) and a PVDF-HFP binder (manufactured by Kureha Corporation) were dispersed and partially dissolved in dimethyl carbonate (manufactured by Nacalai Tesque Inc.) so as to be in a ratio (mass ratio) of primary particles : binder = 100:13.3, and a slurry was obtained. This slurry was sprayed in a spray drier of a nitrogen gas atmosphere of 140°C, and drying was carried out. Secondary particles, with which plural primary particles were aggregated, were thereby obtained. The obtained secondary particles were classified, and the particle diameter D50 of the secondary particles was adjusted to 10 μm.

(Preparation of Negative Electrode Layer)

A resin slurry, which was prepared by mixing vinyl resin that was the resin in the resin layer and carbon together in a mass ratio of 50:50 in an organic solvent, was coated on a negative electrode collector (Ni foil) by a blade method, and was dried on a hot plate at 80°C for 30 minutes, and was further dried at 170°C for 30 minutes. A negative electrode collector having a resin layer was thereby obtained.

The primary particles and secondary particles obtained as described above were mixed together in a volume ratio of primary particles : secondary particles = 5:95, and a negative electrode active material was obtained. 1.0 g of the obtained negative electrode active material, 0.04 g of a conductive material (VGCF, manufactured by Resonac), 0.776 g of a sulfide solid electrolyte (LiI-LiBr-$Li_3PS_4$ sulfide solid electrolyte, D50 = 0.2 μm), 0.02 g of a binder (PVDF, manufactured by Kureha Corporation) that was the active material resin, and 1.7 g of butyl butyrate (manufactured by Kishida Chemical Co., Ltd.) were mixed together by using an ultrasonic homogenizer (UH-50 manufactured by SMT Co., Ltd), and a negative electrode slurry (negative electrode composite material) was prepared. This negative electrode slurry was coated by a blade method on the resin layer on the negative electrode collector obtained as described above, and was dried on a hot plate for 30 minutes at 100°C, and a negative electrode layer (thickness 30 μm) was obtained.

The resin in the resin layer and the active material resin that were used in Example 1 are listed in Table 1.

2. Preparation of Positive Electrode Layer

1.5 g of a positive electrode active material ($LiNi_{0.8}Co_{0.15}Mn_{0.05}O_2$ coated with $LiNbO_3$), 0.023 g of a conductive material (VGCF, manufactured by Resonac), 0.239 g of a sulfide solid electrolyte (LiI-LiBr-$Li_3PS_4$ sulfide solid electrolyte, D50 = 0.2 μm), 0.011 g of a binder (PVDF, manufactured by Kureha Corporation), and 0.8 g of butyl butyrate (manufactured by Kishida Chemical Co., Ltd.) were mixed together by using an ultrasonic homogenizer (UH-50 manufactured by SMT Co., Ltd), and a positive electrode slurry was prepared. This positive electrode slurry was coated by a blade method onto a positive electrode collector (Al foil), and was dried on a hot plate for 30 minutes at 100°C, and a positive electrode layer was obtained.

3. Preparation of Solid Electrolyte Layer

A binder and a solid electrolyte were added into an organic solvent. After addition, kneading was carried out by using an ultrasonic homogenizer, and a slurry for the solid electrolyte was obtained. The obtained slurry for a solid electrolyte was coated onto an Al foil, and a solid electrolyte layer was obtained.

4. Preparation of Battery

The respective electrode layers that were prepared in above 1. through 3. were formed into strip shapes. The composite material surfaces of the positive electrode layer and the solid electrolyte layer were set together, and roll pressing was carried out at 165°C and a pressure of 50 kN·cm, and the Al foil was peeled off. The solid electrolyte layer was thereby transferred onto the positive electrode layer. Further, the composite material surfaces of the negative electrode layer and the solid electrolyte layer were set together, and roll pressing was carried out at 25°C and a pressure of 50 kN·cm, and the transferred foil (Al foil) was peeled off. The solid electrolyte layer was thereby transferred onto the negative electrode layer.

A piece of the negative electrode onto which the solid electrolyte layer had been transferred was punched out by a punching machine of a diameter of 13.00 mm, and a piece of the positive electrode layer was punched out by an 11.28 mm punching machine. A solid electrolyte was further transferred by using a single-axis press onto the negative electrode onto which the solid electrolyte layer had been transferred. The punched-out negative electrode layer and positive electrode layer were made to face one another and made into a battery. Finally, current extracting tabs were attached to both the positive electrode and the negative electrode, and the structure was sealed in an aluminum sheet by using a vacuum laminate sealer and was restrained at a pressure of 5 MPa, and a battery was thereby prepared.

[Example 2 through Example 9, and Comparative Example 1 through Comparative Example 3]

Batteries were prepared in the same way as in Example 1, except that the resins for the resin layer and the resins for the active material that are listed in Table 1 were respectively used. When "no resin layer" is listed in the resin in the resin layer column in Table 1, a negative electrode collector that did not have a resin in the resin layer, i.e., a negative electrode collector that was an Ni foil, was used, and the negative electrode slurry was coated on the Ni foil.

The resins for the resin layer and resins for the active material that were used in Example 2 through Example 9 are given in Table 1.

The resins for the active material that were used in Comparative Example 1 through Comparative Example 3 are given in Table 1.

(Evaluation)

<Peeling Strength Evaluation>

By punching out the negative electrode layers of the Examples and Comparative Examples that were prepared in above-described 4. to diameters of 11.28 mm, and by using a LUMiFrac (manufactured by MS Scientific Co., Ltd.), respective samples were prepared, and measurement of the adhesive strength (peeling strength) of the composite material layer and the collector layer was carried out. The normalized peeling strengths, with that of Comparative Example 1 being 100, were respectively computed. The results are shown in the "normalized peeling strength" column of Table 1.

Samples were prepared by affixing the object of measurement to an adapter, and fixing at a supporting sheet, and mounting a test stamp (weight) thereto.

The measuring conditions were such that the load applied to the sample was increased by 10 rpm (revolutions per minute) / second (approximately 0.2 N/second), and the measurement atmospheric temperature was at 25°C, and the adhered surface area was a diameter of 10 mm and was approximately 78 $mm^2$.

<Battery Resistance Evaluation>

At each of the all-solid-state batteries of the Examples and Comparative Examples that were prepared in above-described 4., with regard to the resistance, the voltage was adjusted to 3.7 V, and the initial resistance value was computed from the voltage drop after 5 seconds of a time of discharging at a 5 C rate. Further, after 40 cycles at 1/3 C rate and 3.0 V - 4.2 V and 60°C, resistance measurement was carried out again, and a post endurance resistance value was calculated.

The rate of increase was calculated from the initial resistance value and the post endurance resistance value, and normalized resistance increase rates with Comparative Example 1 being 100 were respectively calculated. The results of calculation are given in the "normalized resistance increase rate" column in Table 1, and are shown as "normalized

resistance increase rate" in the graph of FIG. 3.

[Table 1]

| | resin for active material | resin for resin layer | normalized peeling strength | normalized resistance increase rate |
|---|---|---|---|---|
| Comp. Ex. 1 | PVDF | no resin layer | 100 | 100 |
| Comp. Ex. 2 | vinyl resin | no resin layer | 112 | 99 |
| Comp. Ex. 3 | SBR | no resin layer | 106 | 100 |
| Ex. 1 | PVDF | vinyl resin | 186 | 91 |
| Ex. 2 | PVDF | SBR | 155 | 92 |
| Ex. 3 | SBR | PVDF | 195 | 89 |
| Ex. 4 | SBR | vinyl resin | 196 | 89 |
| Ex. 5 | vinyl resin | PVDF | 168 | 91 |
| Ex. 6 | vinyl resin | SBR | 201 | 88 |
| Ex. 7 | PVDF | PVDF | 285 | 74 |
| Ex. 8 | vinyl resin | vinyl resin | 362 | 70 |
| Ex. 9 | SBR | SBR | 306 | 73 |

The compounds used in Table 1 are as follows.

PVDF: polyvinylidene fluoride (weight average molecular weight: 800,000)
vinyl resin: polyacetal (weight average molecular weight: 500,000)
SBR: styrene-butadiene rubber (weight average molecular weight: 200,000)

As shown in Table 1 and FIG. 3, it was demonstrated that, in the solid-state battery using a negative electrode having the active material resin and the resin in the resin layer, the peeling strength was improved, the resistance increase rate decreased, and an increase in internal resistance due to charging/discharging was suppressed.

## Claims

**1.** A solid-state battery (100), comprising a first collector (110), a first electrode layer (111), an electrolyte layer (120), a second electrode layer (131) and a second collector (130), in this order, wherein:

the first collector (110) includes a resin layer (112) that contacts the first electrode layer (111),
the first electrode layer (111) contains an electrode active material, and
the electrode active material has an active material resin.

**2.** The solid-state battery (100) of claim 1, wherein:

the electrode active material contains secondary particles, and
the secondary particles contain a plurality of primary particles and the active material resin.

**3.** The solid-state battery (100) of claim 1, wherein the active material resin and a resin in the resin layer (112) have a common structure.

**4.** The solid-state battery (100) of claim 1, wherein the active material resin and a resin in the resin layer (112) have a common functional group.

**5.** The solid-state battery (100) of claim 1, wherein the active material resin and a resin in the resin layer (112) have a common resin.

**6.** The solid-state battery (100) of claim 1, wherein:
the active material resin and a resin in the resin layer (112) include a structure expressed by at least one of the following formula (1) and formula (2):

$$(1):\ \left( CH_2 - CHR \right)_n$$

$$(2):\ \left( CH_2 - CF_2 \right)_n$$

wherein, in formula (1), R represents an alkyl group, an allyl group, a hydroxy group, a carboxy group, a methoxy group or an ethoxy group, and n in each of formula (1) and formula (2) independently represents an integer of 1 or more.

**7.** The solid-state battery (100) of claim 6, wherein:
the active material resin and a resin in the resin layer (112) include a structure expressed by the formula (1), or include a structure expressed by the following formula (2).

**8.** The solid-state battery (100) of claim 1, wherein the active material resin is configured to adhere to the resin layer.

**9.** The solid-state battery (100) of claim 1, wherein the first collector (110) further has a metal layer.

**10.** The solid-state battery (100) of claim 1, wherein the first collector (110) is a conductive resin collector.

**11.** The solid-state battery (100) of claim 1, wherein the resin layer (112) has a region to which the electrode active material adheres.

**12.** The solid-state battery (100) of claim 1, wherein the electrode active material contains an element Si.

**13.** The solid-state battery (100) of claim 9, wherein:

the metal layer is a nickel foil, and
the first collector (110) includes the nickel foil and the resin layer in this order.

**14.** The solid-state battery (100) of claim 1, wherein:

the first electrode layer (111) contains a binder, and
the binder is at least one type selected from the group consisting of styrene-butadiene rubber, polyvinylidene fluoride, and a vinyl resin.

**15.** The solid-state battery (100) of claim 1 through claim14, wherein the solid-state battery is an all-solid-state battery.

FIG. 1

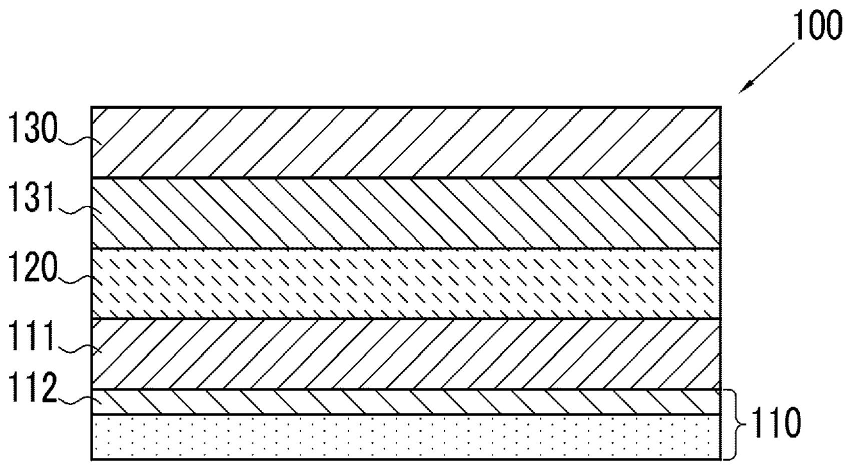

FIG. 2

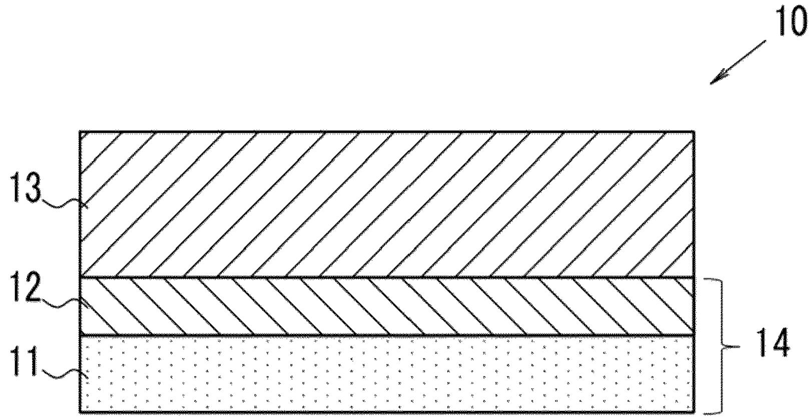

FIG. 3

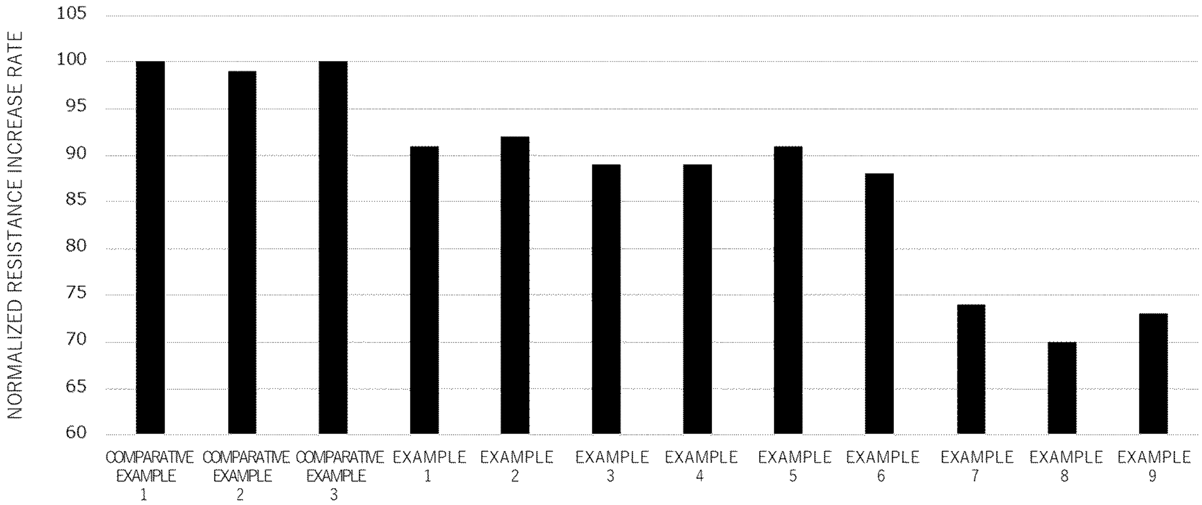
NORMALIZED RESISTANCE INCREASE RATE
105
100
95
90
85
80
75
70
65
60
COMPARATIVE EXAMPLE 1
COMPARATIVE EXAMPLE 2
COMPARATIVE EXAMPLE 3
EXAMPLE 1
EXAMPLE 2
EXAMPLE 3
EXAMPLE 4
EXAMPLE 5
EXAMPLE 6
EXAMPLE 7
EXAMPLE 8
EXAMPLE 9

Europäisches Patentamt
European Patent Office
Office européen des brevets

# EUROPEAN SEARCH REPORT

Application Number
EP 25 20 1312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/141962 A1 (MURATA MANUFACTURING CO [JP]) 18 September 2014 (2014-09-18) * p. 4 paragraphs 3 and 4, p. 6 last paragraph, p. 7 last paragraph, p.8-p.9; claims 1-7; figures 1-3 * ----- | 1-15 | INV. H01M4/134 H01M4/38 H01M4/62 H01M4/66 H01M10/0562 |
| X | EP 3 683 878 A1 (PANASONIC IP MAN CO LTD [JP]) 22 July 2020 (2020-07-22) * paragraphs [0059] - [0062], [0089], [0115], [0122] - [0126], [0153], [0157], [0170]; claims 1-15; figure 1 * ----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 30 January 2026 | Szekely, Noemi Kinga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 1312

This annex lists the patent family members relating to the patent documents cited in the above-mentioned European search report. The members are as contained in the European Patent Office EDP file on The European Patent Office is in no way liable for these particulars which are merely given for the purpose of information.

30-01-2026

| Patent document cited in search report | | Publication date | Patent family member(s) | | Publication date |
|---|---|---|---|---|---|
| WO 2014141962 | A1 | 18-09-2014 | NONE | | |
| EP 3683878 | A1 | 22-07-2020 | CN 111384401 | A | 07-07-2020 |
| | | | EP 3683878 | A1 | 22-07-2020 |
| | | | US 2020212479 | A1 | 02-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019121557 A
- JP 2021057216 A